# EUROPEAN PATENT APPLICATION

(11) **EP 4 711 868 A1**
(43) Date of publication of application: **18.03.2026**
(21) Application number: 24844619.7
(22) Date of filing: 10.07.2024
(51) Int. Cl.: G05B 19/04

(54) **ROBOTIC LAWN MOWER SYSTEM BASED ON CLOUD-EDGE-TERMINAL COLLABORATION, AND ELECTRIC TOOL MANAGEMENT SYSTEM**

(30) Priority: 24.07.2023 CN 202310906130
(71) Applicant: Nanjing Chervon Industry Co., Ltd., Nanjing, Jiangsu 211106 (CN)
(72) Inventor: GAO, Hongchen, Nanjing, Jiangsu 211106 (CN)
(74) Representative: Sun, Yiming
(86) International application number: PCT/CN2024/104692
(87) International publication number: WO 2025/020926

(57) **Abstract**

Provided are a robotic mower system and a power tool management system based on cloud-edge-end collaboration. The robotic mower system includes: a terminal device including a robotic mower and configured to collect at least local data; an edge node communicatively connected to the terminal device, where the edge node is configured to acquire the local data from the terminal device and update a control program of the terminal device by using the local data; and a cloud platform communicatively connected to the edge node, where the cloud platform is configured to acquire the control program from the edge node and perform overall management on control programs.

## Description

This application claims priority to Chinese Patent Application No. 202310906130.0 filed with the China National Intellectual Property Administration (CNIPA) on Jul. 24, 2023, the disclosure of which is incorporated herein by reference in its entirety.

### TECHNICAL FIELD

The present application relates to the technical field of power tools and, in particular, to a robotic mower system and a power tool management system based on cloud-edge-end collaboration.

### BACKGROUND

A large amount of data is generated when the user uses the power tool or when the power tool operates autonomously. In some cases, the data serves as the basis for generating control instructions for the power tool and needs to be collected for relevant computations. In other cases, the data can reflect the user's usage habits and preferences or indicate the direction of power tool improvement and optimization, and the data needs to be collected for analysis and processing. Regardless of whether the data is used for relevant computations or analysis and processing, the requirements for massive data volume, complex computations, high real-time performance, and high accuracy are becoming increasingly prominent. Benefiting from advances in the related art, applications of technological convergence in the field of power tools are becoming more frequent, making the vision of the Internet of Things increasingly attainable.

This part provides background information related to the present application, and the background information is not necessarily the existing art.

### SUMMARY

An object of the present application is to solve or at least alleviate part or all of the preceding problems. Therefore, an object of the present application is to provide a robotic mower system and a power tool management system based on cloud-edge-end collaboration.

To achieve the preceding object, the present application adopts the technical solutions below.

A robotic mower system based on cloud-edge-end collaboration includes: a terminal device including a robotic mower and configured to collect at least local data; an edge node communicatively connected to the terminal device, where the edge node is configured to acquire the local data from the terminal device and update a control program of the terminal device by using the local data; and a cloud platform communicatively connected to the edge node, where the cloud platform is configured to acquire the control program from the edge node and perform overall management on control programs.

In some examples, the edge node transmits the control program to the corresponding terminal device; and the terminal device generates a control instruction for the terminal device according to the control program and the local data.

In some examples, the edge node generates a control instruction for the terminal device according to the control program and the local data and transmits the control instruction to the corresponding terminal device.

In some examples, the terminal device controls a drive electric motor and/or a traveling electric motor of the robotic mower according to the control instruction.

In some examples, the edge node optimizes a control parameter of the control program by using the local data.

In some examples, the control program is a machine learning model, and the edge node trains the original machine learning model and/or retrains the trained machine learning model by using the local data.

In some examples, the edge node performs incremental training on a machine learning model by using the local data.

In some examples, the terminal device further includes a charging pile or positioning base station in a working region of the robotic mower.

In some examples, the terminal device further includes a monitoring device near the working region of the robotic mower.

In some examples, the local data includes environmental data around the robotic mower and/or working state data of the robotic mower collected by the terminal device, where the working state data of the robotic mower includes battery level information and/or positioning information of the robotic mower.

In some examples, the communication between the edge node and the terminal device is implemented via the fifth generation of mobile communications technology (5G) or the sixth generation of mobile communications technology (6G).

In some examples, the edge node includes a regional server.

A robotic mower includes: a drive assembly including a blade and a drive electric motor for driving the blade; and a traveling assembly including traveling wheels and a traveling electric motor for driving the traveling wheels. The robotic mower further includes: a communication assembly communicatively connected to an edge node, where the communication assembly is configured to transmit local data to the edge node so that the edge node updates control programs by using the local data and transmits the control programs to a cloud platform, and the cloud platform performs overall management on the control programs; and a processor electrically connected to the communication assembly, where the processor is configured to control the operation of the robotic mower according to control instructions, and the control instructions are generated according to the control programs and the local data.

A robotic mower system based on cloud-edge-end collaboration includes: a terminal device including a robotic mower and configured to collect at least local data; an edge node communicatively connected to the terminal device, where the edge node is configured to acquire the local data from the terminal device, generate a control instruction for the terminal device according to a first control program and the local data, and transmit the control instruction to the terminal device; and a cloud platform communicatively connected to the edge node and configured to perform overall management on edge nodes.

In some examples, the edge node transmits the local data to the cloud platform; and the cloud platform updates the first control program of the edge node by using the local data and transmits the updated first control program to the edge node.

In some examples, the edge node processes the local data before transmitting the local data to the cloud platform, and the edge node transmits the processed local data to the cloud platform.

In some examples, the edge node updates the first control program by using the local data and transmits the first control program to the cloud platform.

In some examples, the robotic mower system includes multiple robotic mowers, where the edge node schedules the multiple robotic mowers according to a second control program and the local data.

In some examples, the cloud platform updates the second control program of the edge node by using the local data and transmits the updated second control program to the edge node.

In some examples, the edge node updates the second control program by using the local data and transmits the second control program to the cloud platform.

In some examples, the average communication latency between the edge node and the terminal device is less than or equal to 10ms.

A robotic mower includes: a drive assembly including a blade and a drive electric motor for driving the blade; and a traveling assembly including traveling wheels and a traveling electric motor for driving the traveling wheels. The robotic mower further includes: a communication assembly communicatively connected to an edge node, where the communication assembly is configured to transmit local data to the edge node so that the edge node generates a control instruction according to a control program and the local data, a cloud platform performs overall management on edge nodes, and the communication assembly is further configured to receive the control instruction transmitted by the edge node; and a processor electrically connected to the communication assembly, where the processor is configured to control the operation of the robotic mower according to the control instruction.

A robotic mower system based on cloud-edge-end collaboration includes: a terminal device including a robotic mower and configured to collect at least local data; an edge node communicatively connected to the terminal device, where the edge node is configured to acquire the first data from the terminal device and process the first data to generate second data; and a cloud platform communicatively connected to the edge node and configured to perform overall management on edge nodes.

In some examples, the edge node transmits the second data to the terminal device; and the terminal device generates a control instruction according to a control program and the second data.

In some examples, the edge node transmits the second data to the cloud platform; and the cloud platform generates a control instruction for the terminal device according to a control program and the second data.

In some examples, the edge node transmits the second data to the cloud platform; and the cloud platform updates a control program by using the second data and performs overall management on control programs.

In some examples, the cloud platform transmits the control program to the edge node; and the edge node generates a control instruction for the terminal device according to the control program and the second data.

In some examples, the edge node performs data cleaning and/or data integration on the first data.

A robotic mower includes: a drive assembly including a blade and a drive electric motor for driving the blade; and a traveling assembly including traveling wheels and a traveling electric motor for driving the traveling wheels. The robotic mower further includes: a communication assembly communicatively connected to an edge node, where the communication assembly is configured to transmit first data to the edge node so that the edge node processes the first data and generates second data, and a cloud platform performs overall management on edge nodes.

A power tool management system based on cloud-edge-end collaboration includes: multiple terminal devices including one or more of power tools, battery packs, and power management devices, where the multiple terminal devices are configured to collect at least first data; an edge node communicatively connected to at least some of the multiple terminal devices, where the computing power of the edge node is greater than or equal to 1 tera floating point operations per second (TFLOPS), and the edge node is configured to acquire the first data from the at least some of the multiple terminal devices and process the first data to generate second data; and a cloud platform communicatively connected to the edge node, where the cloud platform is configured to acquire the second data from the edge node and perform overall management on the second data.

In some examples, the first data includes real-time data and/or historical data of the multiple terminal devices.

In some examples, the cloud platform manages restart, rollback, and scaling of the edge node according to the second data.

A power tool management system based on cloud-edge-end collaboration includes: multiple terminal devices including one or more of power tools, battery packs, and power management devices, where the multiple terminal devices are configured to collect at least local data; an edge node communicatively connected to at least some of the multiple terminal devices, where the average communication latency between the edge node and each of the multiple terminal devices is less than or equal to 10ms, and the edge node is configured to acquire the local data from the at least some of the multiple terminal devices, generate control instructions for the at least some of the multiple terminal devices according to control programs and the local data, and transmit the control instructions to the at least some of the multiple terminal devices; and a cloud platform communicatively connected to the edge node and configured to perform overall management on edge nodes.

In some examples, the edge node updates the control programs according to the local data and transmits the control programs to the cloud platform.

In some examples, the local data includes sensor data and/or working state data of the multiple terminal devices.

In some examples, the working state data includes one or more of environmental information, battery level information, positioning information, user information, and operation information of the multiple terminal devices.

In some examples, some of the multiple terminal devices transmit the collected local data to other terminal devices of the multiple terminal devices, and the other terminal devices of the multiple terminal devices forward the local data to the edge node.

In some examples, the battery packs transmit the local data to the other terminal devices of the multiple terminal devices through a data terminal (DT).

In some examples, some of the multiple terminal devices transmit the local data to the other terminal devices of the multiple terminal devices through a Bluetooth Low Energy (BLE) unit and/or a near-field communication (NFC) unit.

In some examples, the communication between the multiple terminal devices and the edge node and/or the communication between the edge node and the cloud platform are implemented via 5G.

In some examples, the communication between the multiple terminal devices and the edge node and/or the communication between the edge node and the cloud platform are implemented via the massive multiple-input and multiple-output (MIMO) technology.

### BRIEF DESCRIPTION OF DRAWINGS

FIG. 1 is a network architecture view of a robotic mower system or a power tool management system based on cloud-edge-end collaboration according to an example.
FIG. 2 is a data interaction diagram of a robotic mower system in the case where an edge node updates a control program according to an example.
FIG. 3 is a data interaction diagram of a robotic mower system in the case where an edge node updates a control program according to another example.
FIG. 4 is a data interaction diagram of a robotic mower system in the case where an edge node updates a control program according to another example.
FIG. 5 is a perspective view of some structures of a robotic mower according to an example.
FIG. 6 is a schematic diagram of electric control of the robotic mower in FIG. 5.
FIG. 7 is a data interaction diagram of a robotic mower system in the case where an edge node generates a control instruction according to an example.
FIG. 8 is a data interaction diagram of a robotic mower system in the case where an edge node generates a control instruction according to another example.
FIG. 9 is a data interaction diagram of a robotic mower system in the case where an edge node generates a control instruction according to another example.
FIG. 10 is a data interaction diagram of a robotic mower system in the case where an edge node generates a control instruction according to another example.
FIG. 11 is a data interaction diagram of a robotic mower system in the case where an edge node generates a control instruction according to another example.
FIG. 12 is a data interaction diagram of a robotic mower system in the case where an edge node generates a control instruction according to another example.
FIG. 13 is a data interaction diagram of a robotic mower system in the case where an edge node obtains second data through processing according to an example.
FIG. 14 is a data interaction diagram of a robotic mower system in the case where an edge node obtains second data through processing according to another example.
FIG. 15 is a data interaction diagram of a robotic mower system in the case where an edge node obtains second data through processing according to another example.
FIG. 16 is a data interaction diagram of a robotic mower system in the case where an edge node obtains second data through processing according to another example.
FIG. 17 is a data interaction diagram of a robotic mower system in the case where an edge node obtains second data through processing according to another example.
FIG. 18 is a data interaction diagram of a power tool management system based on cloud-edge-end collaboration according to an example.
FIG. 19 is a data interaction diagram of a power tool management system based on cloud-edge-end collaboration according to another example.

### DETAILED DESCRIPTION

Before any examples of this application are explained in detail, it is to be understood that this application is not limited to its application to the structural details and the arrangement of components set forth in the following description or illustrated in the above drawings.

In this application, the terms "comprising", "including", "having" or any other variation thereof are intended to cover an inclusive inclusion such that a process, method, article or device comprising a series of elements includes not only those series of elements, but also other elements not expressly listed, or elements inherent in the process, method, article, or device. Without further limitations, an element defined by the phrase "comprising a ..." does not preclude the presence of additional identical elements in the process, method, article, or device comprising that element.

In this application, the term "and/or" is a kind of association relationship describing the relationship between associated objects, which means that there can be three kinds of relationships. For example, A and/or B can indicate that A exists alone, A and B exist simultaneously, and B exists alone. In addition, the character "/" in this application generally indicates that the contextual associated objects belong to an "and/or" relationship.

In this application, the terms "connection", "combination", "coupling" and "installation" may be direct connection, combination, coupling or installation, and may also be indirect connection, combination, coupling or installation. Among them, for example, direct connection means that two members or assemblies are connected together without intermediaries, and indirect connection means that two members or assemblies are respectively connected with at least one intermediate members and the two members or assemblies are connected by the at least one intermediate members. In addition, "connection" and "coupling" are not limited to physical or mechanical connections or couplings, and may include electrical connections or couplings.

In this application, it is to be understood by those skilled in the art that a relative term (such as "about", "approximately", and "substantially") used in conjunction with quantity or condition includes a stated value and has a meaning dictated by the context. For example, the relative term includes at least a degree of error associated with the measurement of a particular value, a tolerance caused by manufacturing, assembly, and use associated with the particular value, and the like. Such relative term should also be considered as disclosing the range defined by the absolute values of the two endpoints. The relative term may refer to plus or minus of a certain percentage (such as 1%, 5%, 10%, or more) of an indicated value. A value that did not use the relative term should also be disclosed as a particular value with a tolerance. In addition, "substantially" when expressing a relative angular position relationship (for example, substantially parallel, substantially perpendicular), may refer to adding or subtracting a certain degree (such as 1 degree, 5 degrees, 10 degrees or more) to the indicated angle.

In this application, those skilled in the art will understand that a function performed by an assembly may be performed by one assembly, multiple assemblies, one member, or multiple members. Likewise, a function performed by a member may be performed by one member, an assembly, or a combination of members.

In this application, the terms "up", "down", "left", "right", "front", and "rear" and other directional words are described based on the orientation or positional relationship shown in the drawings, and should not be understood as limitations to the examples of this application. In addition, in this context, it also needs to be understood that when it is mentioned that an element is connected "above" or "under" another element, it can not only be directly connected "above" or "under" the other element, but can also be indirectly connected "above" or "under" the other element through an intermediate element. It should also be understood that orientation words such as upper side, lower side, left side, right side, front side, and rear side do not only represent perfect orientations, but can also be understood as lateral orientations. For example, lower side may include directly below, bottom left, bottom right, front bottom, and rear bottom.

In this application, the terms "controller", "processor", "central processor", "CPU" and "MCU" are interchangeable. Where a unit "controller", "processor", "central processing", "CPU", or "MCU" is used to perform a specific function, the specific function may be implemented by a single aforementioned unit or a plurality of the aforementioned unit.

In this application, the term "device", "module" or "unit" may be implemented in the form of hardware or software to achieve specific functions.

In this application, the terms "computing", "judging", "controlling", "determining", "recognizing" and the like refer to the operations and processes of a computer system or similar electronic computing device (e.g., controller, processor, etc.).

Various power tools and related devices such as charging piles and positioning base stations can generate and collect a large amount of data during user operation and autonomous tool operation. By analyzing and mining the data, improvements can be achieved in multiple aspects of the power tools, including efficiency, accuracy, safety, and user experience. Benefiting from advances in the related art, the field of power tools is showing a trend of technological convergence, and the cloud-edge-end architecture is a practical architecture in the Internet of Things scenario.

Technical solutions proposed in the present application are described below in detail in conjunction with drawings and examples.

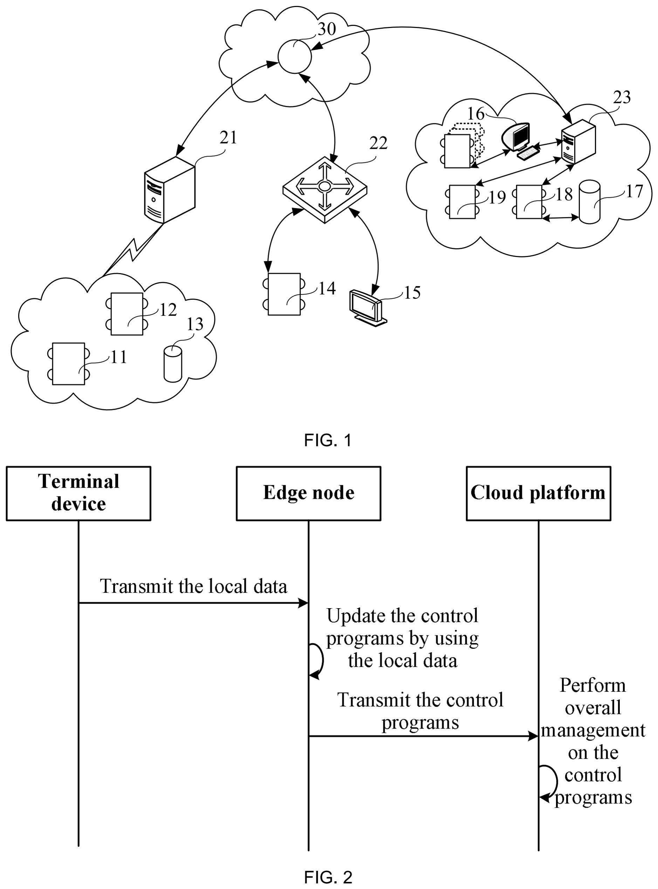

Referring to FIG. 1, the network architecture of a robotic mower system and a power tool management system based on cloud-edge-end collaboration proposed in the present application is described first. Unlike the traditional cloud end architecture consisting of a terminal end and a cloud end, the robotic mower system and the power tool management system proposed in the present application include a terminal end, an edge end, and a cloud end, which achieve communication and interaction, instruction control, and data processing in a cloud-edge-end collaborative manner and can be applied to various working scenarios for various power tools.

The terminal end is a terminal device 10, which is located in the bottom layer of the cloud-edge-end architecture and interacts upward with the edge end. The network may include one or more terminal devices 10, and a large number of terminal devices 10 are generally provided. The terminal devices 10 include various power tools and other related devices that may have data interaction with various power tools. Table 1 below shows the specific types of the terminal devices 10 that may be involved in the present application.

**Table 1**

| | | |
|---|---|---|
| First type | Power tools | Outdoor power devices such as robotic mowers; table tools such as miter saws; handheld power tools such as impact drills, electric hammers, electric circular saws, and reciprocating saws |
| Seco nd type | Related devices for assisting power tools in operation | Power management devices: battery packs, chargers, and adapters; charging piles and positioning base stations within the working region of the power tool; and external sensors related to power tool operation |
| Third type | User equipment and others | Personal computers, laptops, tablet computers, cellular phones, smartphones, and wearable devices of power tool users; monitoring devices within the working region; and related databases |

It is to be understood that the devices in Table 1 above are merely examples for description, and the classification of devices in the table is not absolute. In addition, depending on the actual scenario requirements, the terminal devices 10 may include other types of devices not listed in Table 1.

The edge end is an edge node 20, which is located in the middle layer of the cloud-edge-end architecture, interacts downward with the terminal end, and interacts upward with the cloud end. The edge node 20 performs local edge computing with a smaller data scale and higher real-time performance. The network may include one or more edge nodes 20, and a small number of edge nodes 20 are generally provided. The physical carrier of the edge node 20 includes a server or server cluster, such as a regional server, and in some cases, a smart gateway or a local area network/wide area network center may also serve as the physical carrier of the edge node 20. In the cloud-edge-end architecture, the edge node 20 is responsible for multiple terminal devices 10 within the jurisdiction. That is, one edge node 20 may correspond to one or more terminal devices 10, the multiple terminal devices 10 are located within the jurisdiction of the edge node 20 and are usually geographically proximal to the edge node 20 or proximal to the edge node 20 in the data links, and the edge node 20 provides storage, computing, and communication resources for the corresponding multiple terminal devices 10. As shown in FIG. 1, an edge node 21 may be responsible for terminal devices 11, 12, and 13 within the jurisdiction; an edge node 22 may be responsible for terminal devices 14 and 15 within the jurisdiction; and an edge node 23 may be responsible for terminal devices 16, 17, 18, and 19 within the jurisdiction.

It is to be understood that, in some cases, the terminal devices 10 under the responsibility of the edge node 20 may be dynamically adjusted. For example, a cloud platform 30 may adjust the terminal devices 10 within the jurisdiction of the edge node 20 at regular intervals based on the requirements of the terminal devices 10 and the capabilities of the edge nodes 20.

The cloud end is the cloud platform 30, which is located in the top layer of the cloud-edge-end architecture and interacts downward with the edge end. The cloud platform 30 performs global management and computing with a larger data scale and lower real-time performance. The network may include one or more cloud platforms 30, and multiple cloud platforms 30 are generally provided. The case where one cloud platform 30 is provided is mainly described below. The cloud platform 30 may be a central cloud node in a traditional cloud end architecture, and the physical carrier of the cloud platform 30 includes a server or server cluster. In the cloud-edge-end architecture, the cloud platform 30 is responsible for multiple edge nodes 20. The cloud platform 30 manages various resources of one or more edge nodes 20, or the cloud platform 30 collects, analyzes, and mines various types of data of one or more edge nodes 20. As shown in FIG. 1, the edge nodes 21, 22, and 23 are all managed by the cloud platform 30.

FIGS. 1 and 2 show a robotic mower system based on cloud-edge-end collaboration as an example of the present application. The robotic mower system includes the terminal devices 10, the edge nodes 20, and the cloud platform 30. It is to be understood that the number, types, and connection relationship of the terminal devices 10, the edge nodes 20, and the cloud platforms 30 in FIG. 1 are merely illustrative and do not constitute specific limitations.

In this example, the terminal devices 10 may include robotic mowers. Specifically, the terminal devices 10 may include multiple robotic mowers located in different working regions and belonging to different users. In some examples, the terminal devices 10 may further include charging piles and/or positioning base stations within the working regions of the robotic mowers. In some other examples, the terminal devices 10 further include monitoring devices near the working regions of the robotic mowers. In some other examples, the terminal devices 10 further include external sensors such as electromagnetic sensors within the working regions of the robotic mowers. In some other examples, the terminal devices 10 further include user equipment such as personal computers, tablet computers, and smartphones of the users of the robotic mowers.

The terminal devices 10 may be communicatively connected to the edge nodes 20. Specifically, the terminal devices 10 may establish a connection with the edge node 20 within the jurisdiction of the edge node 20. In some cases, the terminal devices 10 establish a connection with only one edge node 20. In other cases, if multiple edge nodes 20 exist within the same jurisdiction based on the geographical position or data link, the terminal device 10 may select one of the edge nodes 20 to establish a connection based on relevant rules. For example, depending on the type of local data to be transmitted, the terminal device 10 may select a corresponding edge node 20 to establish a connection. For example, the edge node 20 connected to the terminal device 10 transmitting positioning information may be different from the edge node 20 connected to the terminal device 10 transmitting battery level information.

The communication connection between the terminal device 10 and the edge node 20 may be implemented based on a variety of communication technologies or a combination thereof and may conform to the protocol requirements of the communication technologies. In some examples, the communication connection between the terminal device 10 and the edge node 20 may be implemented based on the local area network or wide area network technology. The terminal devices 10 and the edge node 20 within the jurisdiction are in the same local area network or wide area network. Alternatively, the division of the jurisdiction of the terminal devices 10 is based on the division of the local area network or wide area network, and the edge node 20 is the center of the local area network/wide area network. In some other examples, the communication connection between the terminal device 10 and the edge node 20 may be implemented based on the massive MIMO technology and/or 5G. In some other examples, the average communication latency between the terminal device 10 and the edge node 20 is less than or equal to 10ms.

The terminal device 10 transmits the local data generated and/or collected by the terminal device 10 to the corresponding edge node 20. In some cases, the terminal device 10 actively uploads the local data to the edge node 20. In some other cases, in response to the request from the edge node 20, the terminal device 10 feeds back the local data. In some examples, the local data of the terminal device 10 includes environmental data around the robotic mower and/or the working state data of the robotic mower. The environmental data includes environmental images around the robotic mower, and the working state data includes one or more of the battery level information, positioning information, user information, and operation information of the robotic mower.

The same terminal device 10 may transmit one or more types of local data to the edge node 20. The types of local data transmitted by different terminal devices 10 to the edge node 20 may be the same or different. The robotic mower is used as an example. The local data the robotic mower can collect and transmit includes user information of the user to whom the robotic mower belongs, battery level information such as the current battery level or battery level changes over a historical period, positioning information such as the current position or the traveling trajectory over a historical period, and operation information such as the current operation completion degree or the operation history over a historical period.

The charging pile in the working region of the robotic mower is used as an example. The local data the charging pile can collect and transmit includes the current charging state of the charging pile or the charging history over a historical period, as well as battery level information. The positioning base station in the working region of the robotic mower is used as an example. The local data the positioning base station can collect and transmit includes positioning information such as the currently detected position of the robotic mower or the positions of the robotic mower detected over a historical period. The monitoring device near the working region of the robotic mower is used as an example. The local data the monitoring device can collect and transmit includes environmental data such as current environmental images of the working region or environmental videos over a historical period.

The edge node may be a server or server cluster. In some examples, the edge node 20 may be a regional server; and the region may be a physical region, that is, a region composed of multiple devices within a certain geographical range, or the region may be a manually divided region, that is, a region composed of devices of several individual or enterprise users. In some examples, the terminal device 10 and the edge node 20 may be in the same local area network or wide area network, and the edge node 20 may be a management device in the local area network or wide area network, such as a local area network or wide area network center, a smart gateway, or the like.

The edge node may be communicatively connected to the terminal device 10 and the cloud platform 30 described below. Specifically, the edge node 20 may be communicatively connected to one or more terminal devices 10 within the jurisdiction and the cloud platform 30 that manages the edge node 20. The communication connection between the edge node 20 and the terminal devices 10 and the communication connection between the edge node 20 and the cloud platform 30 may be implemented based on a variety of communication technologies, such as a local area network, a wide area network, 5G, and massive MIMO, or a combination thereof. For details, reference is made to the relevant description above, and the details are not repeated here.

The edge node uses the local data acquired from the terminal devices 10 to update the control programs of the terminal devices 10. Specifically, the edge node 20 may store and update the control programs of the terminal devices 10 within the jurisdiction. In some cases, when acquiring the local data from any terminal device 10, the edge node 20 may use the local data from the terminal device 10 to update one or more control programs of the terminal device 10. In some other cases, after acquiring the local data from multiple terminal devices 10, the terminal device 10 may perform a joint update of one or more control programs of the multiple terminal devices 10 by integrating the local data from the multiple terminal devices 10. In addition, the edge node 20 may perform streaming updates to the control programs when acquiring the local data, or the edge node 20 may periodically update the control programs by using the local data within a certain period at intervals.

The control programs are used for generating control instructions for controlling the operations of the terminal devices 10. In some cases, one terminal device 10 may correspond to one control program, and the edge node 20 uses various local data from the terminal device 10 to update the control program. In some other cases, one terminal device 10 may correspond to multiple control programs, and the edge node 20 uses different types of local data from the terminal device 10 to update the corresponding different control programs. For example, the edge node 20 may use charging information to update the charging control program of the terminal device 10 or use positioning information to update the traveling control program of the terminal device 10.

In some examples, the control program of each terminal device 10 may be a machine learning model, and the edge node 20 uses the acquired local data as a training set to train the current machine learning model until the loss function converges, thereby obtaining an updated new machine learning model adapted to the current data environment. In some cases, the edge node 20 may use the local data to train the original machine learning model. In some other cases, the edge node 20 may use the local data to retrain a trained machine learning model or perform downstream task training on a pre-trained machine learning model.

Various optional implementation algorithms exist for the machine learning model described here. As shown in Table 2 below, the machine learning models include, but are not limited to, general machine learning models such as support vector machines, decision trees, naive Bayes, random forests, and k-means; neural network models such as convolutional neural networks, recurrent neural networks, and long short-term memory neural networks; and other types of deep learning models such as encoder-decoder models and generator-discriminator models.

**Table 2**

| | | |
|---|---|---|
| First type | General machine learning models | Linear regression models, support vector machines, decision trees, naive Bayes, random forests, k-nearest neighbors, and k-means |
| Second type | Deep neural network models | Convolutional neural networks, recurrent neural networks, feedforward neural networks, and long short-term memory neural networks |
| Third type | Others | Encoder-decoder models and generative adversarial networks |

The machine learning models in Table 2 above are merely examples for description, and the classification of models in the table is not absolute. In addition, depending on the actual scenario requirements, the machine learning models in this example may include other types of models not listed in Table 2.

It is to be understood that the process of training the machine learning model by using the local data should correspond to the implementation algorithm of the model, distinguishing between supervised and unsupervised models. In some examples, the edge node 20 uses the local data from the terminal device 10 to perform incremental training on the machine learning model of the terminal device 10, for example, to perform regularization-based incremental training and playback-based incremental training, thereby avoiding forgetting the old local data when training the machine learning model with the new local data. In this manner, a balance between model balance and model plasticity can be achieved.

In some other examples, the control program of each terminal device 10 may be a conventional control program, and the edge node 20 uses the acquired local data to optimize the control parameter in the control program. For example, the edge node 20 may use the acquired local data to optimize the threshold parameter used as the decision criterion in the control program to improve the accuracy of the control program in the current data environment. It is to be understood that in the case where one terminal device 10 has multiple control programs, some of the multiple control programs may be machine learning models, and some of the multiple control programs may be conventional control programs.

The edge node further transmits the updated control programs of the terminal devices 10 to the cloud platform 30 so that the cloud platform 30 can perform overall management on the edge node 20 and the control programs of the terminal devices 10. In some cases, the edge node 20 actively uploads the updated control program to the cloud platform 30 after the control program is updated. In some other cases, in response to the request from the cloud platform 30, the edge node 20 feeds back the current control program.

The cloud platform may be a server or server cluster. In some examples, the cloud platform 30 may be a central cloud node in a traditional cloud end architecture. The cloud platform 30 may be communicatively connected to the edge node 20, and the communication connection between the cloud platform 30 and the edge node 20 may be implemented based on a variety of communication technologies and a combination thereof. For details, reference is made to the relevant description above, and the details are not repeated here.

The cloud platform performs overall management on the control programs acquired from the edge node 20. In some examples, the cloud platform 30 may back up the control programs on the edge node 20, and after the edge node 20 crashes and restarts, the cloud platform 30 restores the control programs on the edge node 20. In some other examples, the cloud platform 30 may maintain history records of the control programs stored and updated on the edge node 20, and when the current control programs on the edge node 20 are abnormal, the cloud platform 30 rolls back the control programs on the edge node 20. In some other examples, the cloud platform 30 may maintain history records of the control programs on the edge node 20, score the historical control programs on the edge node 20 at intervals, and send the control program with the optimal score to the edge node 20 so that the edge node 20 can use this control program. In some other cases, control programs are shared across multiple edge nodes 20. When one edge node 20 updates the control program and uploads the new control program, the cloud platform 30 may send the updated new control program to the corresponding multiple edge nodes 20 to save computing resources on the edge nodes 20.

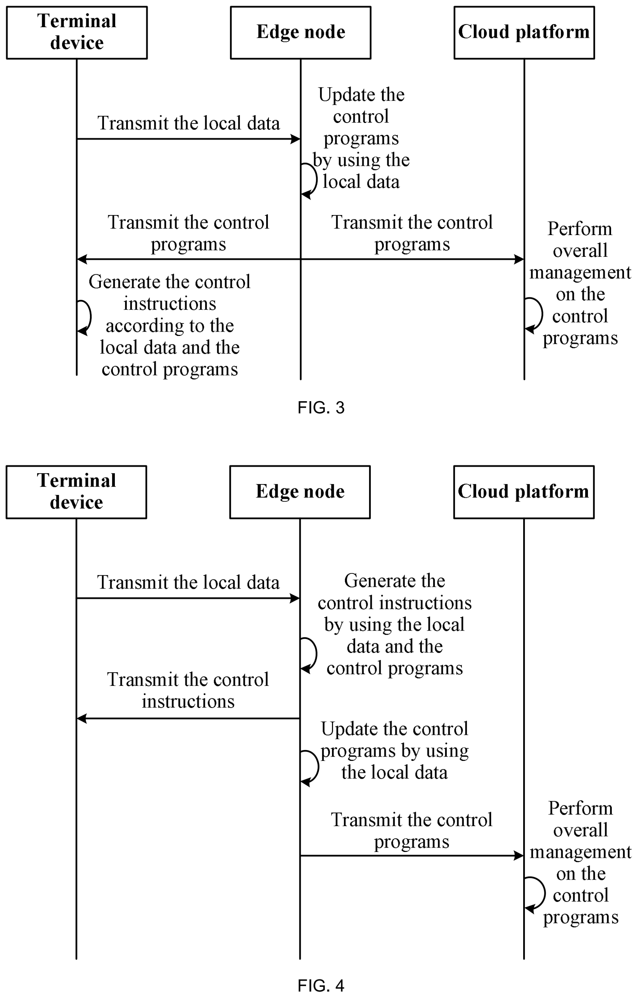

In an example, referring to FIG. 3, the edge node 20 also transmits the control program to the terminal device 10. In some examples, multiple terminal devices 10 share one control program, and the edge node 20 broadcasts the control program to the multiple terminal devices 10. In some other examples, the terminal devices 10 use different control programs, and the edge node 20 transmits the control programs to the corresponding terminal devices 10. In addition, in some cases, the edge node 20 transmits the new control program to the corresponding terminal device 10 after the control program is updated. In some other cases, regardless of whether the control program is updated, the edge node 20 periodically transmits the current control program to the terminal device 10.

Based on the control program acquired from the edge node 20 and the local data, the terminal device 10 generates the control instruction for controlling the operation of the terminal device 10. Specifically, the terminal device 10 inputs the local data as the input parameter into the control program acquired from the edge node 20 and generates the corresponding control instruction based on the output result of the control program. In some examples, the terminal device 10 may be a robotic mower, and based on the generated control instruction, a drive electric motor or a traveling electric motor may be controlled, thereby directly controlling the operation of the robotic mower. In some other examples, the terminal device 10 may be a charging pile, a positioning base station, or a monitoring device, which may send a charging signal, a warning signal, or another related signal to the robotic mower based on the generated control instruction, thereby indirectly controlling the operation of the robotic mower.

In an example, referring to FIG. 4, the edge node 20 generates the control instruction according to the control program and the local data and sends the control instruction to the corresponding terminal device 10. In some cases, the edge node 20 uses the local data from the terminal device 10 to update one or more control programs of the terminal device 10. Subsequently, the edge node 20 may use the local data and one or more control programs of the terminal device 10 to generate the control instruction for the terminal device 10 and transmit the control instruction to the terminal device 10. For example, the edge node 21 uses the positioning information of a robotic mower 11 to update the traveling control program of the robotic mower 11 and uses the battery level information of the robotic mower 11 to update the charging control program of the robotic mower 11. Subsequently, according to the newly acquired new positioning information of the robotic mower 11 and the updated traveling control program, the edge node 21 generates a new traveling control instruction and sends the new traveling control instruction to the robotic mower 11, and according to the newly acquired new battery level information of the robotic mower 11 and the updated charging control program, the edge node 21 generates a new charging control instruction and sends the new charging control instruction to the robotic mower 11.

In some other cases, the edge node 20 performs a joint update of one or more control programs corresponding to multiple terminal devices 10 by integrating the local data from the multiple terminal devices 10. Subsequently, the edge node 20 may use the local data and one or more control programs of the multiple terminal devices 10 to generate the control instructions for the multiple terminal devices 10 and transmit the control instructions to the corresponding terminal devices 10, respectively. For example, the edge node 21 uses the battery level information of the robotic mower 11 and the charging history information of a charging pile 13 to update the charging control programs of the robotic mower 11 and the charging pile 13. Subsequently, according to the newly acquired charging information of the robotic mower 11, the newly acquired charging state information of the charging pile 13, and the charging control programs of the robotic mower 11 and the charging pile 13, the edge node 21 generates the charging control instruction for the robotic mower 11 and the charging control instruction for the charging pile 13 and sends the charging control instructions to the robotic mower 11 and the charging pile 13.

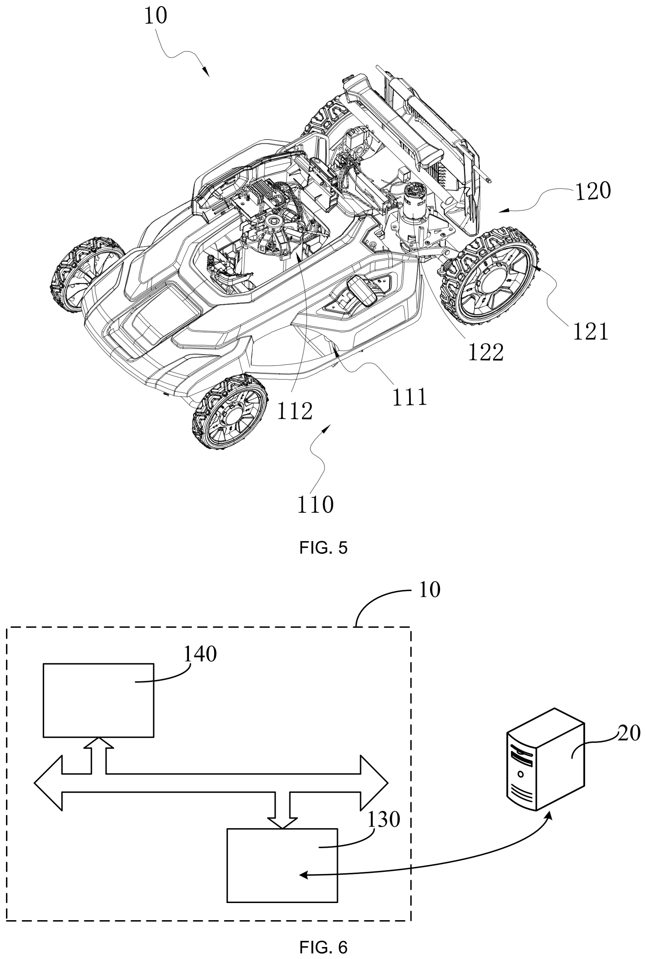

Correspondingly, FIGS. 5 and 6 show a robotic mower 10 applied to the preceding robotic mower system. The robotic mower 10 includes a drive assembly 110, a traveling assembly 120, a communication assembly 130, and a processor 140.

The drive assembly 110 includes a blade 111 and a drive electric motor 112 for driving the blade 111. After rotation, a motor shaft of the drive electric motor 112 transmits power to a first output shaft directly or indirectly via a first transmission assembly to drive the blade 111 to perform mowing. The traveling assembly 120 includes traveling wheels 121 and a traveling electric motor 122 for driving the traveling wheels 121. After rotation, a motor shaft of the traveling electric motor 122 transmits power to a second output shaft directly or indirectly via a second transmission assembly to drive the traveling wheels 121 to travel on a target path. In some examples, the traveling electric motor 122 is a wheel hub motor in which power, transmission, and braking-related devices are integrated into a wheel hub.

The communication assembly 130 is communicatively connected to the edge node 20 and may be a communication circuit such as a transceiver chip that is adapted to various communication technology requirements. The communication assembly 130 is configured to transmit local data to the edge node 20 so that the edge node 20 can update the control programs by using the local data, and the communication assembly 130 is configured to transmit the control programs to the cloud platform 30 so that the cloud platform 30 can perform overall management on the control programs. The processor 140 is electrically connected to the communication assembly 130 and may be a microcontroller unit (MCU) or a central processing unit (CPU). The processor 140 is configured to control the operation of the robotic mower according to the control instructions, and the control instructions are generated according to the control programs and the local data.

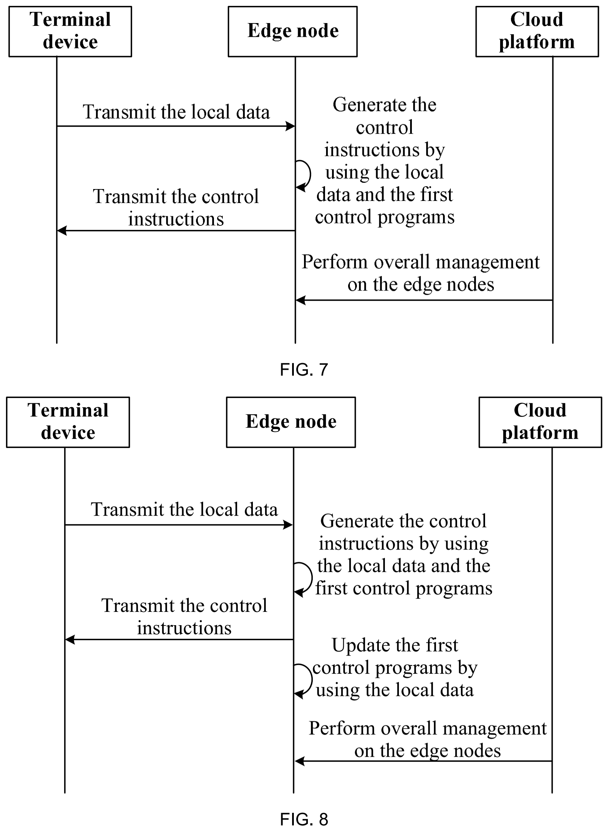

FIG. 7 is a data interaction diagram of a robotic mower system based on cloud-edge-end collaboration as another example of the present application. The robotic mower system includes the terminal devices 10, the edge nodes 20, and the cloud platform 30. For the specific physical carriers of the terminal device 10, the edge node 20, and the cloud platform 30 and the specific communication connection method among the terminal device 10, the edge node 20, and the cloud platform 30, reference may be made to the relevant description above, and the details are not repeated here.

In this example, the terminal device 10 may transmit the local data generated and/or collected by the terminal device 10 to the corresponding edge node 20. According to the local data acquired from the terminal devices 10 and first control programs of the terminal devices 10, the edge node 20 generates control instructions for controlling the terminal devices 10 and transmits the control instructions to the corresponding terminal devices 10. The cloud platform 30 performs overall management on the edge nodes 20.

The first control programs are conventional control programs or machine learning models with the local data from the terminal devices 10 as the input parameters, and the output results can be used for generating the control instructions for controlling the terminal devices 10. In some cases, the same terminal device 10 may correspond to multiple first control programs with different types of local data of the terminal device 10 as the input parameters, and the program output results are used for generating control instructions with different control purposes. For example, to control the movement of the robotic mower 11, the edge node 21 is provided with a first traveling control program for generating the traveling control instruction for the robotic mower 11 in conjunction with local data such as the positioning information of the robotic mower 11. For another example, to control the charging of the robotic mower 11, the edge node 21 is further provided with a first charging control program for generating the charging control instruction for the robotic mower 11 in conjunction with local data such as the battery level information of the robotic mower 11. In some other cases, one first control program may use the local data from the multiple terminal devices 10 as the input parameters and may be used for generating corresponding control instructions for the multiple terminal devices 10. For example, the edge node 21 is provided with the first charging control program for generating the charging control instruction for the robotic mower 11 and the charging control instruction for the charging pile 13 in conjunction with the local data such as the battery level of the robotic mower 11 and the charging history of the charging pile 13.

The control instructions may directly or indirectly control the operations of the robotic mower and other terminal devices 10. In some examples, the control instruction may be transmitted to the robotic mower, and the control instruction may carry relevant parameters such as the traveling speed, the traveling direction, and the traveling trajectory so that the robotic mower can travel on a target path at a target speed along a target direction after receiving the control instruction. In some other examples, the control instruction may provide early warnings of dangerous situations such as approaching a boundary line or a cliff so that the robotic mower can perform operations such as stopping, decelerating, or avoiding the danger after receiving the control instruction. In some other examples, the control instruction may instruct the robotic mower to return to the charging pile for charging. In some other examples, the control instructions may be transmitted to user equipment such as a tablet computer or a smartphone, and the control instructions may notify the user of various information statuses of the terminal devices 10 within the working region where the robotic mower is located.

In an example, referring to FIG. 8, the edge node 20 further updates the first control programs of the terminal devices 10 by using the local data from the terminal devices 10 after acquiring the local data from the terminal devices 10. For the details of how the edge node 20 updates the control programs by using the local data, reference may be made to the relevant description above, and the details are not repeated here.

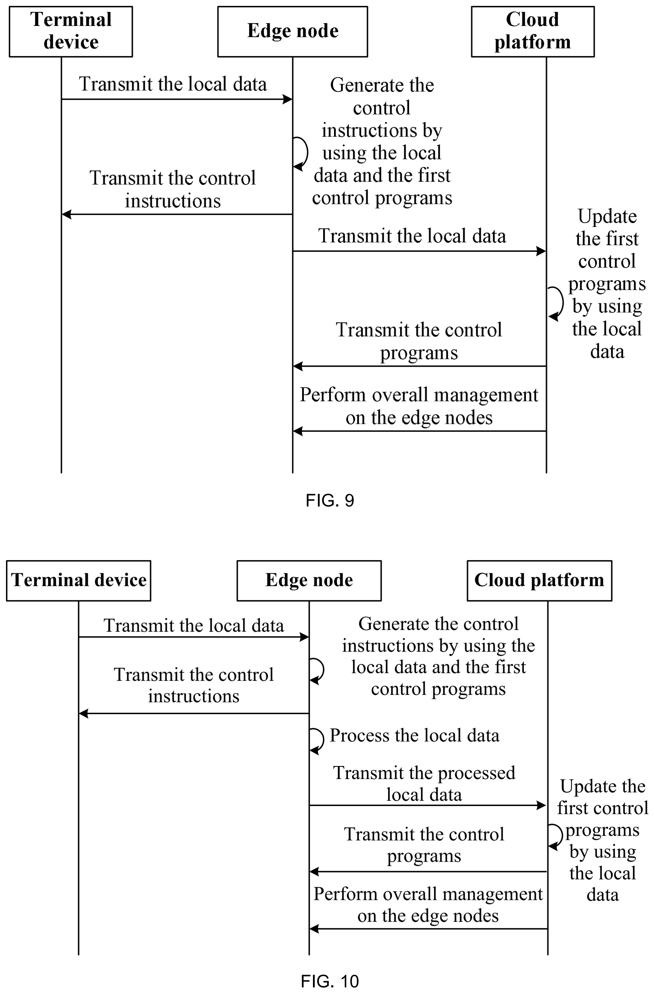

In an example, referring to FIG. 9, the edge node 20 may transmit the local data acquired from the terminal devices 10 to the cloud platform 30, and the cloud platform 30 may use the local data acquired from the edge node 20 to update the first control programs and transmit the updated first control programs to the corresponding edge node 20. One edge node 20 may correspond to one or more first control programs. In some examples, the multiple first control programs corresponding to one edge node 20 include first control programs corresponding to various data types. After acquiring the local data, the cloud platform 30 may update the first control program corresponding to the data type of the local data. For example, after acquiring the charging information of the robotic mower and/or charging pile, the cloud platform 30 updates the first charging control program. In some other examples, the multiple first control programs corresponding to one edge node 20 include the first control programs of the terminal devices 10 within the jurisdiction of the edge node 20. After acquiring the local data, the cloud platform 30 may update the first control program of the corresponding data type of the terminal device 10 based on the terminal device 10 to which the local data belongs and the data type of the local data. For example, after acquiring the charging information of the robotic mower 11, the cloud platform 30 updates the first charging control program of the robotic mower 11.

In some examples, referring to FIG. 10, before transmitting the local data from the terminal devices 10 to the cloud platform 30, the edge node 20 performs data processing on the local data from the terminal devices 10 and then transmits the processed local data to the cloud platform 30. The data processing includes, but is not limited to, data cleaning such as duplicate data processing, missing data processing, and abnormal data processing, as well as image preprocessing operations such as cropping and compression, grayscale conversion, and geometric transformation. Subsequently, the cloud platform 30 updates the first control programs by using the processed local data.

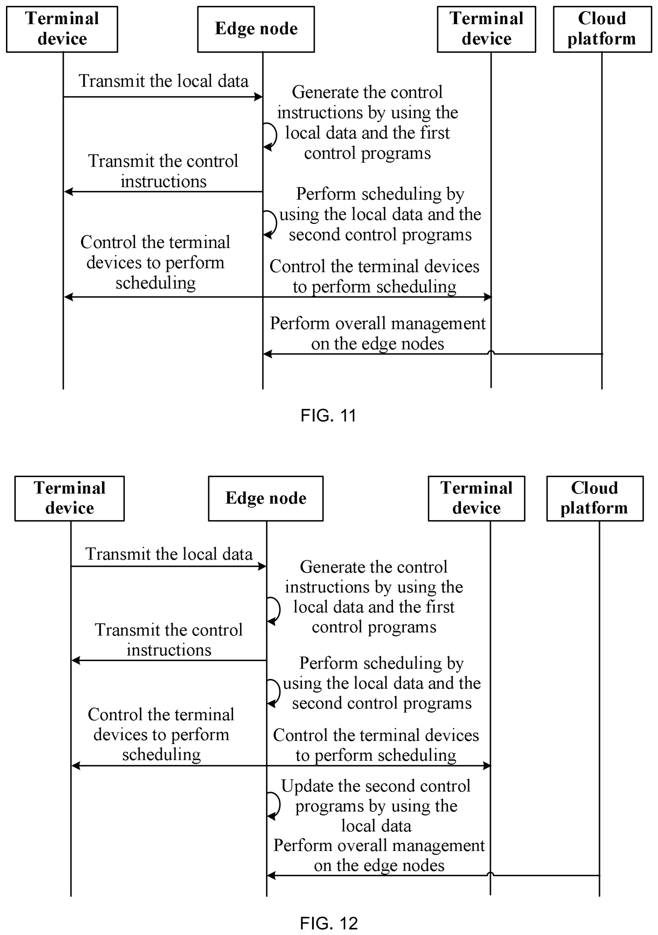

In an example, referring to FIG. 11, the robotic mower system includes multiple terminal devices 10 that need to work together. With the multiple robotic mowers in the robotic mower system as an example, the edge node 20 schedules the multiple robotic mowers in the robotic mower system according to the local data acquired from the terminal devices 10 and a second control program of the edge node 20. In some examples, multiple robotic mowers work together to perform the simultaneous localization and mapping (SLAM) task, the edge node 23 may be provided with a second SLAM control program, and in conjunction with the local data such as the positioning information of robotic mowers 18 and 19, the edge node 23 may schedule the robotic mowers 18 and 19 to move on respective target paths at respective target speeds along respective target directions to respective target points.

In some examples, referring to FIG. 12, the edge node 20 further updates the second control program of the edge node 20 by using the local data from the terminal devices 10 after acquiring the local data from the terminal devices 10. For the details of how the edge node 20 updates the control programs by using the local data, reference may be made to the relevant description above, and the details are not repeated here. In some other examples, the edge node 20 may transmit the local data acquired from the terminal devices 10 to the cloud platform 30, and the cloud platform 30 may use the local data acquired from the edge node 20 to update the second control program and transmit the updated second control program to the corresponding edge node 20. For the details of how the cloud platform 30 updates the control programs by using the local data, reference may be made to the relevant description above, and the details are not repeated here.

The overall management of the edge nodes 20 by the cloud platform 30 includes not only operations such as backup, historical recording, scoring, collection, and distribution of the first and second control programs on the edge nodes 20 as described above, but also the monitoring and evaluation of the storage, computing, and communication resources of the edge nodes 20. In some examples, the cloud platform 30 may perform scaling operations on the edge nodes 20 and may also allocate channel bandwidths for the edge nodes 20.

Correspondingly, the robotic mower 10 applied to the preceding robotic mower system includes the drive assembly 110, the traveling assembly 120, the communication assembly 130, and the processor 140. The drive assembly 110 includes the blade 111 and the drive electric motor 112 for driving the blade 111. The traveling assembly 120 includes the traveling wheels 121 and the traveling electric motor 122 for driving the traveling wheels 121. The communication assembly 130 is communicatively connected to the edge node 20 and is configured to transmit local data to the edge node 20 so that the edge node 20 can generate the control instruction according to the control program and the local data. The cloud platform 30 performs overall management on the edge nodes 20. The communication assembly 130 is further configured to receive the control instruction transmitted by the edge node 20. The processor 140 is electrically connected to the communication assembly 130 and is configured to control the operation of the robotic mower according to the control instruction.

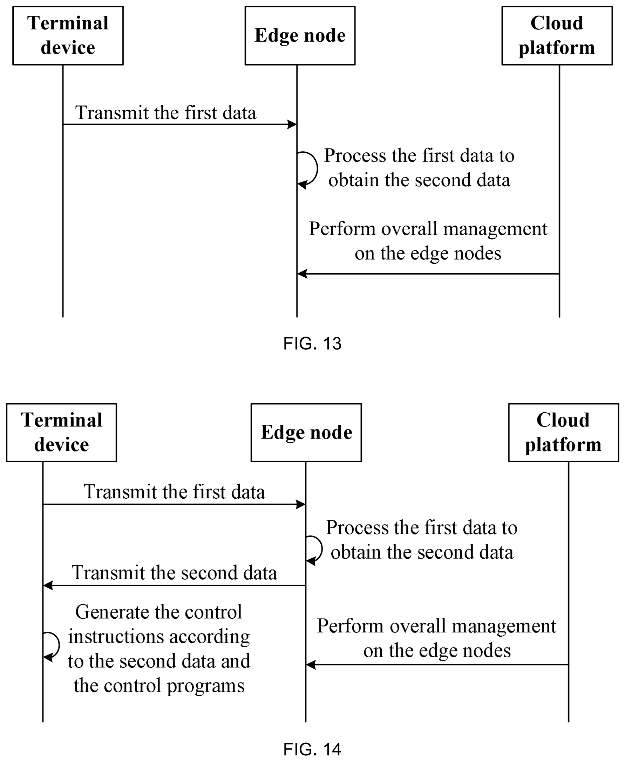

FIG. 13 is a data interaction diagram of a robotic mower system based on cloud-edge-end collaboration as another example of the present application. The robotic mower system includes the terminal devices 10, the edge nodes 20, and the cloud platform 30. For the specific physical carriers of the terminal device 10, the edge node 20, and the cloud platform 30 and the specific communication connection method among the terminal device 10, the edge node 20, and the cloud platform 30, reference may be made to the relevant description above, and the details are not repeated here.

In this example, the terminal device 10 may transmit the first data generated and/or collected by the terminal device 10 to the corresponding edge node 20. The edge node 20 processes the first data acquired from the terminal devices 10 and generates the second data. The cloud platform 30 performs overall management on the edge nodes 20.

The first data is equivalent to the local data described above and may include environmental data such as environmental images, as well as working state data such as positioning information, battery level information, and user information. In some examples, the edge node 20 may perform various data processing operations on the first data of the terminal devices 10, such as data cleaning and heterogeneous data integration, thereby converting the first data, which is multi-source, heterogeneous, error-prone, and redundant, into the second data that is easier for the computer to process and analyze. In some examples, data cleaning performed by the edge node 20 on the first data includes, but is not limited to, duplicate value removal, missing value imputation, outlier handling, data smoothing, noise reduction, normalization, standardization, and data dimensionality reduction. In some other examples, in the case where the first data is image data, cropping and compression, grayscale conversion, geometric transformation, image enhancement, and the like may further be included.

In an example, referring to FIG. 14, after obtaining the second data, the edge node 20 returns the second data to the terminal device 10, and the terminal device 10 may generate the control instruction according to the control program and the second data, thereby controlling the robotic mower in the robotic mower system based on the generated control instruction.

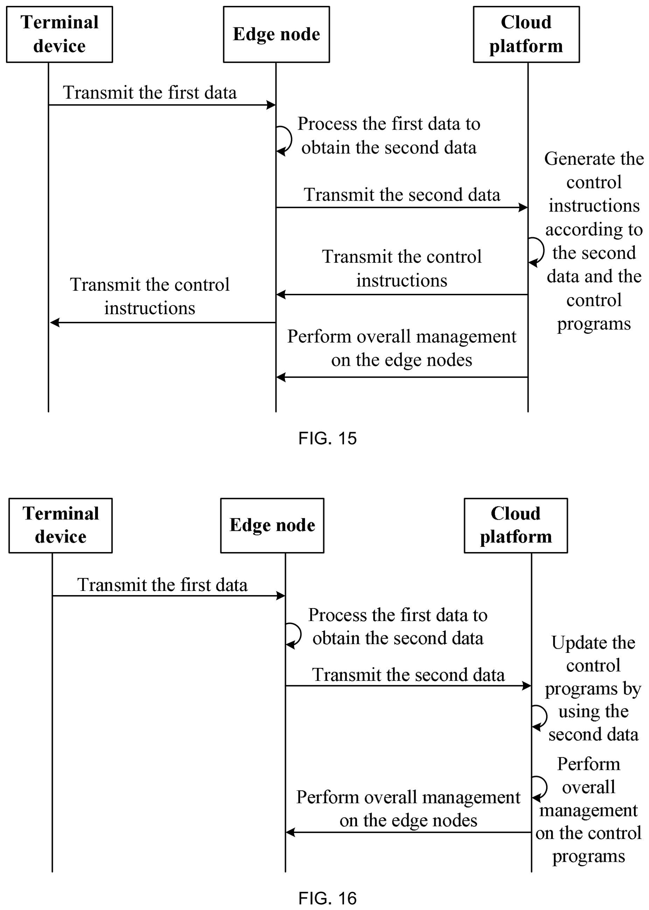

In an example, referring to FIG. 15, after the edge node 20 obtains the second data from the terminal device 10 by processing, the edge node 20 also transmits the second data to the cloud platform 30, and the cloud platform 30 may generate the control instruction according to the second data and the control program of the edge node 20 or the terminal device 10. In some examples, the cloud platform 30 may return the generated control instruction to the edge node 20 so that the edge node 20 can forward the control instruction to the corresponding terminal device 10. For the details of how the cloud platform 30 generates the control instruction according to the control program and the related data, reference may be made to the relevant description above, and the details are not repeated here.

In an example, referring to FIG. 16, after the edge node 20 obtains the second data from the terminal device 10 by processing, the edge node 20 also transmits the second data to the cloud platform 30, and the cloud platform 30 may update the control programs of the edge node 20 or the terminal device 10 by using the second data and perform overall management on the control programs. For the details of how the cloud platform 30 updates the control programs by using the related data and performs overall management on the control programs, reference may be made to the relevant description above, and the details are not repeated here.

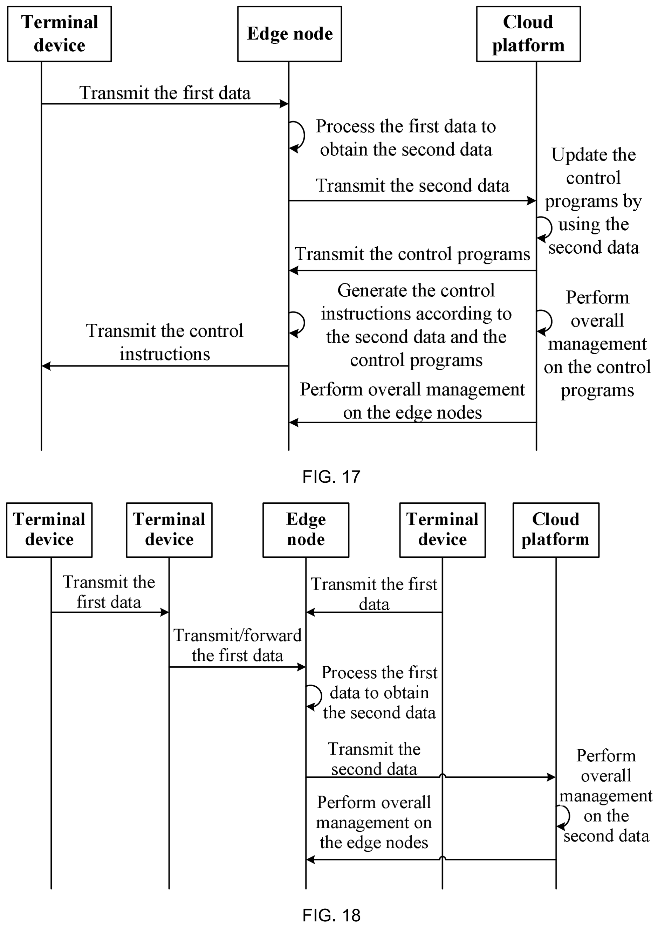

In an example, referring to FIG. 17, the cloud platform 30 transmits the control program to the corresponding edge node 20. After obtaining the second data by processing, the edge node 20 may generate the control instruction according to the second data and the control program and transmit the control instruction to the corresponding terminal device 10 so that the terminal device 10 can control the operation of the robotic mower based on the control instruction. For the details of how the edge node 20 generates the control instruction according to the control program and the related data, reference may be made to the relevant description above, and the details are not repeated here.

The overall management of the edge nodes 20 by the cloud platform 30 includes not only operations such as backup, historical recording, collection, and distribution of the second data on the edge nodes 20 as described above, but also the monitoring and evaluation of the storage, computing, and communication resources of the edge nodes 20. In some examples, the cloud platform 30 may perform scaling operations on the edge nodes 20 and may also allocate channel bandwidths for the edge nodes 20.

In some examples, the cloud platform 30 may manage the second data acquired by the edge nodes 20, including sorting, analysis, and mining. For example, it is assumed that a top-level task that requires collaboration among multiple terminal devices 10 in the robotic mower system exists. The case where multiple robotic mowers 18 and 19 work together to perform the SLAM task is used as an example. The edge node 23 may process the original first data from the robotic mowers 18 and 19 to obtain the second data that represents the local maps around the robotic mowers 18 and 19 and transmit the second data to the cloud platform 30. After acquiring the second data, the cloud platform 30 may organize and analyze the local maps to generate a global map of the working region where the robotic mowers 18 and 19 are located.

Correspondingly, the robotic mower 10 applied to the preceding robotic mower system includes the drive assembly 110, the traveling assembly 120, the communication assembly 130, and the processor 140. The drive assembly 110 includes the blade 111 and the drive electric motor 112 for driving the blade 111. The traveling assembly 120 includes the traveling wheels 121 and the traveling electric motor 122 for driving the traveling wheels 121. The communication assembly 130 is communicatively connected to the edge node 20 and is configured to transmit the first data to the edge node 20 so that the edge node 20 can process the first data and generate the second data. The cloud platform 30 performs overall management on the edge nodes 20.

FIG. 18 is a data interaction diagram of a power tool management system as an example of the present application. The power tool management system includes the terminal devices 10, the edge nodes 20, and the cloud platform 30.

In this example, the terminal devices 10 may include at least one or more of power tools, battery packs, and power management devices. Specifically, the terminal devices 10 may include multiple power tools of different types located in different regions and belonging to different users, as well as power management devices such as battery packs, chargers, and adapters for the multiple power tools. In some examples, the terminal devices 10 may include related devices for assisting power tools in operation, such as charging piles, positioning base stations, and monitoring devices, as well as user equipment such as tablet computers and smart computers.

The terminal device 10 may be communicatively connected to the edge node 20 and may transmit the generated and/or collected first data to the edge node 20. For the details on the communication connection between the terminal device 10 and the edge node 20 and the data transmission, reference may be made to the relevant description above, and the details are not repeated here. The first data includes real-time data and/or historical data, which may include real-time data such as user operation data, sensor data, and working state data generated in real time during the user operation or autonomous operation of power tools, power management devices, charging piles, positioning base stations, and monitoring devices and may also include historical data such as the usage history or working history of the preceding devices. In some examples, the first data further includes real-time data and historical data generated and/or collected by the user through the user equipment for controlling devices such as power tools. For the specific data types of the first data, reference may be made to Table 3 below.

**Table 3**

| | |
|---|---|
| Power tools and related devices for assisting the power tools in operation | The tool type, tool model, tool serial number, service life, operation information, traveling speed, traveling direction, traveling path, real-time positioning, obstacle recognition information, road condition recognition information, boundary recognition information, equipment temperature, equipment battery level, working mode, blade height, blade speed, and the like |
| Power management devices | The model, serial number, charge/discharge voltage, current, battery level, temperature, and humidity of the battery pack, charger, or adapter |
| User equipment and others | Environmental images, environmental videos, weather information, network information, user information, tool type, tool model, tool serial number, maintenance and replacement information of components, task information, and the like |

The edge node 20 may be communicatively connected to some terminal devices 10, process the first data acquired from the terminal devices 10 to generate the second data, and transmit the second data to the cloud platform 30. The edge node 20 processes the first data to obtain the second data, including data cleaning and data integration for the first data. For details, reference may be made to the relevant description above, and the details are not repeated here. The computing power of the edge node 20 is greater than or equal to 1000 TFLOPS to ensure the capability of processing massive amounts of data. Floating point operations per second (FLOPS) is a unit for measuring server computing power, which represents the number of floating point operations the computer can perform per second. The computing power of the edge node 20 is greater than or equal to 1 TFLOPS, which means that the number of floating point operations the edge node 20 can perform per second exceeds 10¹². In some cases, tera operations per second (TOPS) is also used as a unit of server computing power, 1 TOPS represents that the computer processor can perform 10¹² operations per second, and the computing power of the edge node 20 may be greater than or equal to 1000 TOPS. In some examples, the computing power of the edge node 20 may be greater than or equal to 1 giga floating point operations per second (GFLOPS), that is, the number of floating point operations the edge node 20 can perform per second exceeds 10⁹; or the computing power of the edge node 20 may be greater than or equal to 1 peta floating point operations per second (PFLOPS), that is, the number of floating point operations the edge node 20 can perform per second exceeds 10¹⁵.

The cloud platform 30 may be communicatively connected to the edge nodes 20 and perform overall management on the edge nodes 20 and the second data acquired from the edge nodes 20. The cloud platform 30 may perform operations such as backup and historical recording of the second data on the edge nodes 20 to manage operations such as restart and rollback of the edge nodes 20. The cloud platform 30 may also sort, analyze, and mine the second data to obtain deeper information by integrating big data. In some examples, the cloud platform 30 may also perform operations such as scaling and channel bandwidth allocation on the edge nodes 20 based on the requirements of the terminal devices 10 and the capabilities of the edge nodes 20. For details, reference may be made to the relevant description above, and the details are not repeated here.

In an example, some terminal devices 10 are directly communicatively connected to the edge node 20, while other terminal devices 10, other than these directly connected terminal devices 10, are not directly communicatively connected to the edge node 20. The first data generated and/or collected by these non-directly connected terminal devices 10 is forwarded to the edge node 20 by the directly connected terminal devices 10.

In some examples, the directly connected terminal devices 10 establish a connection with the edge node 20 based on technologies such as a local area network, a wide area network, 5G, and massive MIMO, the directly connected terminal devices 10 are mostly geographically adjacent to the non-directly connected terminal devices 10, and the non-directly connected terminal devices 10 may establish a connection with the directly connected terminal devices 10 based on technologies such as BLE, NFC, and Wireless Fidelity (Wi-Fi) so that the directly connected terminal devices 10 can forward the first data generated and/or collected by the non-directly connected terminal devices 10 to the edge node 20. In some examples, the directly connected terminal devices 10 may be tablet computers, smartphones, and other user equipment, while the non-directly connected terminal devices 10 may be various power tools, power management devices, such as chargers, adapters, and battery packs, as well as charging piles, positioning base stations, and monitoring devices. The first data from the non-directly connected terminal devices 10 is transmitted to the user equipment and then transmitted from the user equipment to the edge node 20.

In some other examples, the non-directly connected terminal device 10 includes the battery pack, and through a DT, the battery pack can transmit the first data of the battery pack to the terminal device 10, such as the power tool, that is equipped with the battery pack, so that the terminal device 10, such as the power tool, that is equipped with the battery pack, can transmit the first data of the battery pack to the edge node 20.

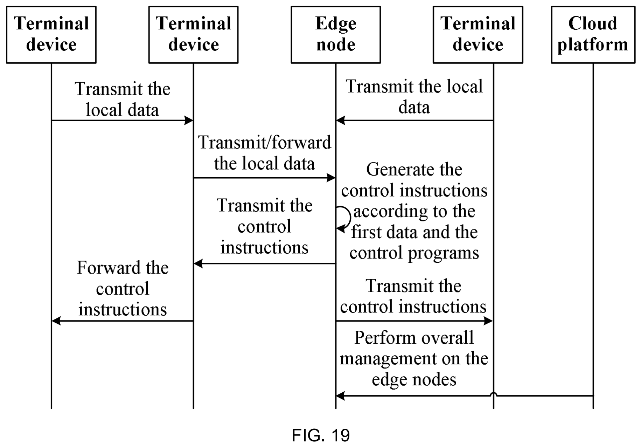

FIG. 19 is a data interaction diagram of a power tool management system as another example of the present application. The power tool management system includes the terminal devices 10, the edge nodes 20, and the cloud platform 30.

In this example, the terminal devices 10 may include at least one or more of power tools, battery packs, and power management devices. Specifically, the terminal devices 10 may include multiple power tools of different types located in different regions and belonging to different users, as well as power management devices such as battery packs, chargers, and adapters for the multiple power tools. In some examples, the terminal devices 10 may include related devices for assisting power tools in operation, such as charging piles, positioning base stations, and monitoring devices, as well as user equipment such as tablet computers and smart computers.

The terminal device 10 may be communicatively connected to the edge node 20 and may transmit the generated and/or collected local data to the edge node 20. For the details on the communication connection between the terminal device 10 and the edge node 20 and the data transmission, reference may be made to the relevant description above, and the details are not repeated here. The local data described here is equivalent to the first data described above. Reference may be made to the relevant description above. For the specific data types, reference may be made to Table 3 above.

The edge node 20 may be communicatively connected to some terminal devices 10, generate control instructions for the terminal devices 10 according to the local data acquired from the terminal devices 10 and the control programs of the terminal devices 10, and transmit the control instructions to the terminal devices 10. For the details of how the edge node 20 generates the control instructions according to the local data and the control programs, reference may be made to the relevant description above, and the details are not repeated here. The average communication latency between the edge node 20 and the terminal device 10 is less than or equal to 10ms to ensure real-time control for the terminal device 10. The communication connection between the edge node 20 and the terminal device 10 may be implemented based on technologies such as 5G and massive MIMO. In some examples, the average communication latency between the edge node 20 and the terminal device 10 may be less than or equal to 5ms or may be less than or equal to 3ms.

The cloud platform 30 may be communicatively connected to the edge nodes 20 and perform overall management on the edge nodes 20. The cloud platform 30 may perform operations such as backup and historical recording of the control programs on the edge nodes 20 to manage operations such as restart and rollback of the edge nodes 20. The cloud platform 30 may further deliver models to the edge nodes 20 based on the timeliness and/or scores of the control programs. In some examples, the cloud platform 30 may also perform operations such as scaling and channel bandwidth allocation on the edge nodes 20 based on the requirements of the terminal devices 10 and the capabilities of the edge nodes 20. For details, reference may be made to the relevant description above, and the details are not repeated here.

Similar to the description above, some terminal devices 10 may be directly communicatively connected to the edge node 20, while other terminal devices 10, other than these directly connected terminal devices 10, are not directly communicatively connected to the edge node 20. The local data generated and/or collected by the non-directly connected terminal devices 10 is forwarded to the edge node 20 by the directly connected terminal devices 10. For details, reference may be made to the relevant description above, and the details are not repeated here.

FIGS. 18 and 19 illustrate that a power tool management system based on cloud-edge-end collaboration can achieve a fleet service in the Internet of Things (IoT) scenario. Multiple terminal devices 10, including various power tools, power management devices, charging piles, positioning base stations, monitoring devices, and user equipment, may belong to different users, but constitute the same group (fleet). The edge node 20 and the cloud platform 30 work together to provide services for the terminal devices 10 in this group. The following description is provided in conjunction with specific scenarios.

In an example, the power tool management system provides anti-loss services for the fleet. The data transmitted by the power tool to the edge node 20 may include the user information of the current user, the current positioning information, and the like. The data transmitted by the positioning base station and the monitoring device to the edge node 20 may include the user information, number information, and positioning information of the power tool within the positioning/monitoring range. When the power tool needs to be positioned, a request is sent from the user equipment to the edge node 20, and through cloud-edge collaboration, the preceding information may be used to determine the current position and the current user of the power tool.

In an example, the power tool management system provides power management services for the fleet; the power tool may transmit data such as the current battery level and the historical battery level to the edge node 20; the battery pack, the charger, and the adapter may transmit data such as the charge and discharge voltage, the current, and the battery level; and the charging pile may transmit data such as the current charging state and the charging history. In an example, through cloud-edge-end collaboration, the battery health states of the power tool and the power management device can be monitored, and when the battery health state is poor, the user is notified of timely replacement or maintenance. In another example, through cloud-edge-end collaboration, the battery levels of the power tool and the power management device can be monitored, and when the battery level is low, the user is notified to perform charging or schedule the charging plan based on the task calendar. In another example, through cloud-edge-end collaboration, the charging and discharging processes of the power tool and the power management device can be monitored to ensure charging safety.

In an example, the power tool management system provides safety management services for the fleet; the power tool may transmit data such as equipment temperature, equipment noise, and working duration to the edge node 20; the battery pack, the charger, and the adapter may transmit data such as the charge and discharge voltage, the current, and the battery level; the monitoring device may transmit data such as environmental images and environmental videos within the monitoring range; through cloud-edge-end collaboration, the temperature, voltage, current, vibration, and noise of the power tool and the power management device can be monitored so that early warning and/or shutdown control can be performed in case of over-temperature, overcurrent, or overload; problems such as fires can be monitored and alarmed through image data and video data.

In an example, the power tool management system provides task management services for the fleet. In an example, the terminal devices 10 may transmit operation history to the edge node 20, and through cloud-edge-end collaboration, operation task evaluations in terms of efficiency and costs can be performed. In another example, the terminal devices 10 may transmit data such as tool models, positioning information, battery level information, and user information to the edge node 20, and tasks can be scheduled through cloud-edge-end collaboration.

The basic principles, main features, and advantages of this application are shown and described above. It is to be understood by those skilled in the art that the aforementioned examples do not limit the present application in any form, and all technical solutions obtained through equivalent substitutions or equivalent transformations fall within the scope of the present application.

## Claims

1. A robotic mower system based on cloud-edge-end collaboration, comprising:
a terminal device comprising a robotic mower and configured to collect at least local data;
an edge node communicatively connected to the terminal device, wherein the edge node is configured to acquire the local data from the terminal device and update a control program of the terminal device by using the local data; and
a cloud platform communicatively connected to the edge node, wherein the cloud platform is configured to acquire the control program from the edge node and perform overall management on the control program.

2. The robotic mower system of claim 1, wherein the edge node transmits the control program to the corresponding terminal device; and the terminal device generates a control instruction for the terminal device according to the control program and the local data.

3. The robotic mower system of claim 1, wherein the edge node generates a control instruction for the terminal device according to the control program and the local data and transmits the control instruction to the corresponding terminal device.

4. The robotic mower system of claim 2 or 3, wherein the terminal device controls a drive electric motor and/or a traveling electric motor of the robotic mower according to the control instruction.

5. The robotic mower system of claim 1, wherein the edge node optimizes a control parameter of the control program by using the local data.

6. The robotic mower system of claim 1, wherein the control program is a machine learning model, and the edge node trains an original machine learning model and/or retrains a trained machine learning model by using the local data.

7. The robotic mower system of claim 5, wherein the edge node performs incremental training on a machine learning model by using the local data.

8. The robotic mower system of claim 1, wherein the terminal device further comprises a charging pile or positioning base station in a working region of the robotic mower or a monitoring device near the working region of the robotic mower.

9. The robotic mower system of claim 1, wherein the local data comprises environmental data around the robotic mower and/or working state data of the robotic mower collected by the terminal device, wherein the working state data of the robotic mower comprises one or more of environmental information, battery level information, positioning information, user information, and operation information of the robotic mower.

10. The robotic mower system of claim 1, wherein communication between the edge node and the terminal device and/or communication between the edge node and the cloud platform are implemented via fifth generation of mobile communications technology (5G), sixth generation of mobile communications technology (6G), or massive multiple-input and multiple-output (MIMO) technology.

11. The robotic mower system of claim 1, wherein the edge node comprises a regional server.

12. A robotic mower system based on cloud-edge-end collaboration, comprising:
a terminal device comprising a robotic mower and configured to collect at least local data;
an edge node communicatively connected to the terminal device, wherein the edge node is configured to acquire the local data from the terminal device, generate a control instruction for the terminal device according to a first control program and the local data, and transmit the control instruction to the terminal device; and
a cloud platform communicatively connected to the edge node and configured to perform overall management on edge nodes.

13. The robotic mower system of claim 12, wherein the edge node transmits the local data to the cloud platform; and the cloud platform updates the first control program of the edge node by using the local data and transmits the updated first control program to the edge node.

14. The robotic mower system of claim 13, wherein the edge node processes the local data before transmitting the local data to the cloud platform, and the edge node transmits the processed local data to the cloud platform.

15. The robotic mower system of claim 12, wherein the edge node updates the first control program by using the local data and transmits the first control program to the cloud platform.

16. The robotic mower system of claim 12, comprising a plurality of robotic mowers, wherein the edge node schedules the plurality of robotic mowers according to a second control program and the local data.

17. The robotic mower system of claim 16, wherein the cloud platform updates the second control program of the edge node by using the local data and transmits the updated second control program to the edge node.

18. The robotic mower system of claim 16, wherein the edge node updates the second control program by using the local data and transmits the second control program to the cloud platform.

19. The robotic mower system of claim 12, wherein average communication latency between the edge node and the terminal device is less than or equal to 10ms.

20. A robotic mower system based on cloud-edge-end collaboration, comprising:
a terminal device comprising a robotic mower and configured to collect at least local first data;
an edge node communicatively connected to the terminal device, wherein the edge node is configured to acquire the first data from the terminal device and process the first data to generate second data; and
a cloud platform communicatively connected to the edge node and configured to perform overall management on edge nodes.

21. The robotic mower system of claim 20, wherein the edge node transmits the second data to the terminal device; and the terminal device generates a control instruction according to a control program and the second data.

22. The robotic mower system of claim 20, wherein the edge node transmits the second data to the cloud platform; and the cloud platform generates a control instruction for the terminal device according to a control program and the second data.

23. The robotic mower system of claim 20, wherein the edge node transmits the second data to the cloud platform; and the cloud platform updates a control program by using the second data and performs overall management on control programs.

24. The robotic mower system of claim 23, wherein the cloud platform transmits the control program to the edge node; and the edge node generates a control instruction for the terminal device according to the control program and the second data.

25. The robotic mower system of claim 20, wherein the edge node performs data cleaning and/or data integration on the first data.

26. A power tool management system based on cloud-edge-end collaboration, comprising:
a plurality of terminal devices comprising one or more of power tools, battery packs, and power management devices, wherein the plurality of terminal devices are configured to collect at least first data;
an edge node communicatively connected to at least some of the plurality of terminal devices, wherein computing power of the edge node is greater than or equal to 1000 tera floating point operations per second (TFLOPS), and the edge node is configured to acquire the first data from the at least some of the plurality of terminal devices and process the first data to generate second data; and
a cloud platform communicatively connected to the edge node, wherein the cloud platform is configured to acquire the second data from the edge node and perform overall management on the second data.

27. The power tool management system of claim 26, wherein the first data comprises real-time data and/or historical data of the plurality of terminal devices.

28. The power tool management system of claim 26, wherein the cloud platform manages restart, rollback, and scaling of the edge node according to the second data.

29. A power tool management system based on cloud-edge-end collaboration, comprising:
a plurality of terminal devices comprising one or more of power tools, battery packs, and power management devices, wherein the plurality of terminal devices are configured to collect at least local data;
an edge node communicatively connected to at least some of the plurality of terminal devices, wherein average communication latency between the edge node and each of the plurality of terminal devices is less than or equal to 10ms, and the edge node is configured to acquire the local data from the at least some of the plurality of terminal devices, generate control instructions for the at least some of the plurality of terminal devices according to control programs and the local data, and transmit the control instructions to the at least some of the plurality of terminal devices; and
a cloud platform communicatively connected to the edge node and configured to perform overall management on edge nodes.

30. The power tool management system of claim 29, wherein the edge node updates the control programs according to the local data and transmits the control programs to the cloud platform.

31. The power tool management system of claim 29, wherein the local data comprises sensor data and/or working state data of the plurality of terminal devices, wherein the working state data comprises one or more of environmental information, battery level information, positioning information, user information, and operation information of the plurality of terminal devices.

32. The power tool management system of claim 29, wherein some of the plurality of terminal devices transmit the collected local data to other terminal devices of the plurality of terminal devices, and the other terminal devices of the plurality of terminal devices forward the local data to the edge node.

33. The power tool management system of claim 32, wherein the battery packs transmit the local data to the other terminal devices of the plurality of terminal devices through a data terminal (DT).

34. The power tool management system of claim 32, wherein the some of the plurality of terminal devices transmit the local data to the other terminal devices of the plurality of terminal devices through a Bluetooth Low Energy (BLE) unit and/or a near-field communication (NFC) unit.

35. The power tool management system of claim 29, wherein communication between the plurality of terminal devices and the edge node and/or communication between the edge node and the cloud platform are implemented via fifth generation of mobile communications technology (5G).

36. The power tool management system of claim 29, wherein communication between the plurality of terminal devices and the edge node and/or communication between the edge node and the cloud platform are implemented via massive multiple-input and multiple-output (MIMO) technology.
